# EUROPEAN PATENT SPECIFICATION

(11) **EP 2 418 863 B1**
(45) Date of publication and mention of the grant of the patent: **30.03.2016**
(21) Application number: 11174909.9
(22) Date of filing: 21.07.2011
(51) Int. Cl.: H04N 13/04

(54) **Display apparatus**
Anzeigevorrichtung
Appareil d'affichage

(30) Priority: 12.08.2010 KR 20100077899
(43) Date of publication of application: 15.02.2012
(73) Proprietor: Samsung Display Co., Ltd., Gyeonggi-do (KR)
(72) Inventor: Lee, Hwan-Woong, 112-205 Chungcheongnam-do (KR); Kang, Moon-Shik, 605-201 Gyeonggi-do (KR); Kwon, Young-Sup, 104-602 Gyeonggi-do (KR)
(74) Representative: Dr. Weitzel & Partner

(56) References cited:
- WO-A1-2008/045681
- US-A1- 2007 126 691
- US-B1- 6 724 352

## Description

### BACKGROUND OF THE INVENTION

### 1. Field of the Invention

Exemplary embodiments of the present invention relate to a display apparatus. More particularly, exemplary embodiments of the present invention relate to a display apparatus having an enhanced display quality.

### 2. Description of the Related Art

Generally, a display apparatus displays a two-dimensional ("2D") image. Recently, due to high demands for three-dimensional ("3D") image displays in various fields such as games and movies, for example, display apparatuses for displaying the 3D image have been continuously developed. A 3D image may be perceived by an observer when the observer watches two different 2D images through a left eye and a right eye, respectively, and the two different 2D images are combined in the observer's brain.

A 3D image display apparatus typically displays a 3D image using a binocular parallax through two eyes of the observer. That is, images of an object are viewed at different angles by each of the two eyes and the images viewed at different angles are inputted to the observer's brain since the two eyes of the observer are spaced apart from each other.

Conventional 3D image display apparatus using the binocular parallax may be divided into a stereoscopic type (with glasses) display apparatus and an autostereoscopic type (without glasses) display apparatus. The stereoscopic type display apparatus may be divided into an anaglyph type display apparatus and a shutter glasses type display apparatus, for example. In the anaglyph type display apparatus, a pair of glasses having a blue lens and a red lens is typically used. In the shutter glasses type display apparatus, a left-eye image and a right-eye image are temporally divided to be displayed thereon in a period, and a pair of glasses, in which a left-eye shutter and a right-eye shutter are closed and opened in a synchronized manner with the period, is typically used.

Since a 3D liquid crystal display ("LCD") apparatus is generally driven in a progressive scan method, time points at which a line data is applied to a plurality of horizontal lines of the LCD apparatus are different from each other, and liquid crystal responses at a same time point are different from each other. Thus, when a 3D image is displayed on a screen of the LCD apparatus by alternately displaying a left-eye image and a right-eye image, a substantial amount of crosstalk may be generated due to different gradations between the left-eye image and the right-eye image and different display timings between the left-eye image and the right-eye image when driven by the progressive scan method. The crosstalk may substantially decrease a display quality of a 3D image. In addition, direct-illumination type light emitting diodes ("LED"s) and edge type LEDs may be used to prevent the crosstalk. However, a serial communication is typically employed to drive a light source such as the direct-illumination type LEDs and edge type LEDs. Thus, manufacturing costs of the LCD apparatus may substantially increase when direct-illumination type LEDs and edge type LEDs are used.
US 2007/126691 A1 discloses a display apparatus, whereby the generation of the light source driving signals is based on a three-dimensional image enable signal.
US 6 724 352 B1 discloses an apparatus for controlling liquid-crystal-display (LCD) shutter glasses for making the right and left LCD-type shutter of the LCD shutter glasses transparent alternately.
WO 2008/045681 A1 discloses backlights for display devices, including light rods, slats, or segments, arranged in parallel and used for light extraction from light sources such as a light emitting diode.

### SUMMARY OF THE INVENTION

Exemplary embodiments of the present invention provide a display apparatus which has an enhanced display quality to be manufactured in low manufacturing costs.

According to one aspect of the present invention, a display apparatus includes a display panel and a light source module. More in detail, the display apparatus comprises: a display panel which selectively displays a 2D image and a 3D image in response to a three-dimensional image signal; and a light source module comprising: a first light-emitting module comprising first to k-th top light source blocks disposed adjacent to a first edge of a light guide plate, wherein k is a natural number; a second light-emitting module comprising first to m-th bottom light source blocks disposed adjacent to a second edge of the light guide plate, wherein m is a natural number, and the second edge is disposed opposite to the first edge; and a light source driving part which generates first to k-th top duty control signals and first to m-th bottom duty control signals based a the first image, selectively generating first to k-th top driving signals and first to m-th bottom driving signals using the first to k-th duty control signals and the first to m-th duty control signals, in response to a first enable signal and a second enable signal, respectively, wherein the first to k-th top duty control signals correspond to the first to k-th top light source blocks, and the first to m-th bottom duty control signals correspond to the first to m-th bottom light source blocks, and wherein the first to k-th top driving signals drive the first light-emitting module, and the first to m-th bottom driving signals drive the second light-emitting module, wherein the first and second enable signals have different values during a same period to turn on a corresponding light source block of the first light-emitting module and turn off a corresponding light source block of the second light-emitting module, when a 3D image is displayed in response to a first level of the three-dimensional image signal, and wherein the first and second enable signals have a same value during a same period when a 2D image is displayed in response to a second level of the three-dimensional image signal.

In an exemplary embodiment, the display apparatus may further comprise a pair of shutter glasses including a first shutter and a second shutter, wherein the display panel displays an image for a plurality of frames that divided into a first interval and a second interval, which are alternately continued, wherein the display panel displays a first image during an N-th frame included in the first interval and an (N+1)-th frame included in the second interval, and displays a second image during an (N+2)-th frame included in the first interval and an (N+3)-th frame included in the second interval, wherein N is a natural number, the first shutter is opened and the second shutter is closed in correspondence with the N-th frame and the (N+1)-th frame, and the first shutter is closed and the second shutter is opened in correspondence with the (N+2)-th frame and the (N+3)-th frame.

In an exemplary embodiment, the shutter glasses open and close the first shutter after a preset time in response to a vertical start signal of a left-eye image of the first image, and the shutter glasses open and close the second shutter after the preset time in response to a vertical start signal of a right-eye image of the second image.

In an exemplary embodiment, wherein the light source driving part comprises: a dimming level determining part which determines first to k-th top duty ratios and first to m-th bottom duty ratios using the first image and the second image; and a duty control signal generating part which generates the first to k-th top duty control signals and the first to m-th bottom duty control signals using the first to k-th top duty ratios and the first to m-th bottom duty ratios.

In an exemplary embodiment, the dimming control part comprises: an image analyzing part which obtains a representative luminance value by analyzing the first image corresponding to the first to k-th top light source blocks and the second image corresponding to the first to m-th bottom light source blocks; and a dimming level determining part which determines the first to k-th top duty ratios and the first to m-th bottom duty ratios using the representative luminance value, wherein the first to k-th top duty ratios control a brightness of the first to k-th top light source blocks, and the first to m-th bottom duty ratios control a brightness of the first to m-th bottom light source blocks.

In an exemplary embodiment, the duty control signal generating part comprises: a first converting part which generates the first to k-th top driving signals using the first to k-th top duty control signals when the three-dimensional image enable signal has a low level, and generate the first to k-th top driving signals using the first to k-th top duty control signals during the first interval when the three-dimensional image enable signal has a high level; and a second converting part which generates the first to m-th bottom driving signals using the first to m-th bottom duty control signals when a three-dimensional image enable signal has a low level, and generates the first to m-th bottom driving signals using the first to m-th bottom duty control signals during the second interval when the three-dimensional image enable signal has a high level.

In an exemplary embodiment, the first converting part comprises: a first switching part which transmits the first to k-th top duty control signals in response to the first enable signal, and blocks the first to k-th top duty control signals in response to the second enable signal, wherein the first enable signal has a high level in correspondence with the first interval, and the second enable signal has a high level in correspondence with the second interval; and a first driving part which generates the first to k-th top driving signals using the first to k-th top duty control signals provided from the first switching part, and drives the first light-emitting module.

In an exemplary embodiment, the second converting part comprises: a second switching part which transmits the first to m-th bottom duty control signals in response to the second enable signal, and blocks the first to m-th bottom duty control signals in response to the first enable signal, wherein the first enable signal has a high level in correspondence with the first interval, and the second enable signal has a high level in correspondence with the second interval; and a second driving part which generates the first to m-th bottom driving signals using the first to m-th bottom duty control signals provided from the second switching part, and drives the second light-emitting module.

In an exemplary embodiment, the first switching part may include first to k-th switches, and the second switching part may include first to m-th switches.

In an exemplary embodiment, each of the first driving part and the second driving part boosts the first to k-th top duty control signals and the first to m-th bottom duty control signals, respectively, in response to the three-dimensional image enable signal.

In an exemplary embodiment, the first enable signal is synchronized with a first image data of the first image after a preset time in response to a vertical start signal of a left-eye image included in the first image, and the second enable signal is synchronized with a first image data of the second image after the preset time in response to a vertical start signal of a right-eye image included in the second image.

In an exemplary embodiment, the first image comprises a left-eye image and a black image, the second image comprises a right-eye image and the black image, the left-eye image included in the first image is sequentially displayed on first to k-th display blocks of the display panel during the N-th frame and the (N+1)-th frame, and the right-eye image included in the second image is sequentially displayed on the first to k-th display blocks of the display panel during the (N+2)-th frame and the (N+3)-th frame.

According to a display apparatus, a first light-emitting module and a second light-emitting module using edge type light-emitting diodes ("LEDs") are driven using first to k-th top duty control signals parallelly applied to a display apparatus, so that the display apparatus may be driven in a dimming driving mode. In exemplary embodiments of the display apparatus which displays a three-dimensional image, the crosstalk generated therein is substantially decreased, the display quality of the display apparatus is substantially enhanced, and the manufacturing cost of the display apparatus is substantially reduced.

### BRIEF DESCRIPTION OF THE DRAWINGS

The above and other aspects, features and advantages of the present invention will become more apparent by describing in detailed exemplary embodiments thereof with reference to the accompanying drawings, in which:
FIG. 1 is a block diagram illustrating an exemplary embodiment of a display apparatus according to the present invention;
FIG. 2 is a block diagram illustrating an exemplary embodiment of an image converting part of FIG. 1;
FIG. 3 is a schematic circuit diagram illustrating a first light-emitting module, a second light-emitting module and a duty control signal converting part of an exemplary embodiment of a light source module 400 in FIG. 1;
FIGS. 4A and 4B are perspective plan views illustrating a shutter glasses, a display panel, a light-guide plate, a first light-emitting module and a second light-emitting module that are used when a three-dimensional ("3D") image is displayed on the display apparatus of FIG. 1; and
FIGS. 5A and 5B are signal timing diagrams of signals used in an exemplary embodiment of a driving method of first and second light-emitting modules of FIG. 1 and an exemplary embodiment of an image display method of a display apparatus using the driving method.

### DETAILED DESCRIPTION OF THE INVENTION

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity.

It will be understood that when an element or layer is referred to as being "on" or "connected to" another element or layer, the element or layer can be directly on or connected to another element or layer or intervening elements or layers. In contrast, when an element is referred to as being "directly on" or "directly connected to" another element or layer, there are no intervening elements or layers present. As used herein, connected may refer to elements being physically and/or electrically connected to each other. Like numbers refer to like elements throughout. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the invention.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

All methods described herein can be performed in a suitable order unless otherwise indicated herein or otherwise clearly contradicted by context. The use of any and all examples, or exemplary language (e.g., "such as"), is intended merely to better illustrate the invention and does not pose a limitation on the scope of the invention unless otherwise claimed. No language in the specification should be construed as indicating any non-claimed element as essential to the practice of the invention as used herein.

Hereinafter, the invention will be explained in detail with reference to the accompanying drawings.

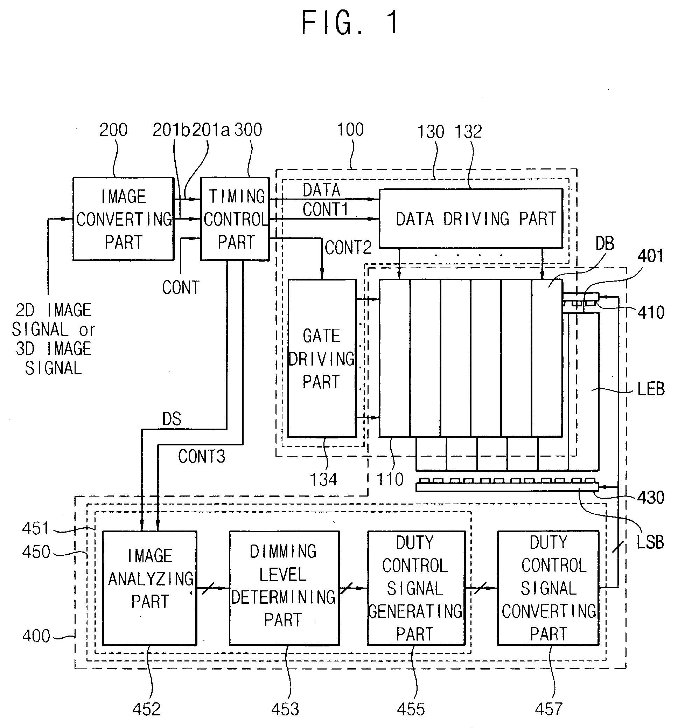

FIG. 1 is a block diagram illustrating an exemplary embodiment of a display apparatus according to the present invention.

Referring to FIG 1, the display apparatus includes a display unit 100, an image converting part 200, a timing control part 300 and a light source module 400. The display apparatus may selectively display a two dimensional ("2D") image and a three-dimensional ("3D") image. The display apparatus includes a display panel 110. In an exemplary embodiment, the display panel 100 may be a full high definition ("FHD") display panel having a high resolution, such as a resolution of 1920 X 1080, for example. The display unit 100 further includes a panel driving part 130 which drives the display panel 110. The panel driving part 130 includes a data driving part 132 and a gate driving part 134.

The display panel 110 displays images based on a data signal outputted from the data driving part 132 and a gate signal outputted from the gate driving part 134.

The display panel 110 may include two substrates and a liquid crystal interposed between the two substrates. The display panel 110 may include a plurality of pixels for displaying images. Each of the pixels may include a switching element electrically connected to a gate line and a data line, a liquid crystal capacitor electrically connected to the switching element and a storage capacitor electrically connected to the switching element.

The data driving part 132 converts a digital data signal into a data voltage, which may be an analog voltage, based on a first control signal CONT1 and an image data DATA that are received from the timing control part 300, and then outputs the data voltage to data lines.

The gate driving part 134 generates gate signals to be applied to gate lines disposed on the display panel 110 based on a second control signal CONT2 received from the timing control part 300, and sequentially outputs the gate signals to the gate lines.

The image converting part 200 receives a first image signal from a video system (not shown) disposed at an outside. The first image signal may be a 2D image signal or a 3D image signal. When the first image signal is the 3D image signal, the image converting part 200 divides the first image signal into a left-eye image signal and a right-eye image signal to recombine a left-eye and right-eye images, and then provides the timing control part 300 with a first output image 201a. When the first image signal is the 2D image signal, the image converting part 200 provides the timing control part 300 with a second output image 201b.

The timing control part 300 receives a control signal CONT applied from an external device (not shown), generates the first control signal CONT1 for controlling a driving timing of the data driving part 132 and the second control signal CONT2 for controlling a driving timing of the gate driving part 134, and provides the data driving part 132 and the gate driving part 134 with the first control signal CONT1 and the second control signal CONT2, respectively. The timing control part 300 provides an image analyzing part 452 of the light source driving part 450 with a third control signal CONT3 for controlling a driving timing of the light source driving part 450 and a second image signal DS for generating driving signals of the light source driving part 450.

The light source module 400 includes a light guide plate ("LGP") 401, a first light-emitting module 410, a second light-emitting module 430 and a light source driving part 450.

In an exemplary embodiment, the first light-emitting module 410 is disposed adjacent to a first edge of the LGP 401, and the second light-emitting module 430 is disposed adjacent to a second edge of the LGP 401. The first and second light-emitting modules 410 and 430 include first to k-th top light source blocks and first to m-th bottom light source blocks, respectively. Here, 'k' and 'm' are natural numbers. In an exemplary embodiment, each of the light source blocks may include a plurality of light-emitting diodes ("LED"s). In an exemplary embodiment, the number of light source blocks of the first light-emitting module 410 may be equal to the number of light source blocks of the second light-emitting module 430. That is, 'k' is equal to `m'. In an alternative exemplary embodiment, the number of light source blocks of the first light-emitting module 410 may be different from the number of light source blocks of the second light-emitting module 430. That is, 'k' is different from `m'. Hereinafter, for convenience of description, an exemplary embodiment, in which 'k' is equal to 'm,' will be explained.

The light source driving part 450 includes a dimming control part 451 and a duty control signal converting part 457.

The dimming control part 451 includes an image analyzing part 452, a dimming level determining part 453 and a duty control signal generating part 455.

The image analyzing part 452 determines representative luminance values of the first to k-th top light source blocks and the first to m-th bottom light source blocks using a third control signal CONT3 and a second image signal DS, which are provided from the timing control part 300. In an exemplary embodiment, the image analyzing part 452 analyzes a second image signal of a frame unit to determine a representative value of a display block DB when lights irradiated from the first to k-th light source blocks and first to m-th light source blocks are incident on the display panel 110. The representative luminance value of the light source blocks may be determined using a representative value of gray levels of image signal corresponding to the display block, such as a maximum value, an average value, a weighted average value and an optimum value between the maximum value or the average value, for example.

The dimming level determining part 453 determines first to k-th top duty ratios corresponding to amounts of light emitted by the first to k-th top light source blocks and first to m-th bottom duty ratios corresponding to amounts of light emitted by the first to m-th bottom light source blocks using the representative luminance values.

The duty control signal generating part 455 generates the first to k-th top control signals which control the amounts of light emitted by the first to k-th top light source blocks using the first to k-th top duty ratios. The duty control signal generating part 455 generates the first to m-th bottom control signals which control the amounts of light emitted by the first to m-th bottom light source blocks using the first to m-th bottom duty ratios.

The duty control signal generating part 455 generates the first to k-th top duty control signals having a predetermined frequency and the first to m-th bottom duty control signals using the third control signal CONT3. In an exemplary embodiment, the third control signal CONT3 may include the vertical start signal and a horizontal synchronization signal.

The duty control signal converting part 457 converts the first to k-th top duty control signals and the first to m-th bottom duty control signals, in which a pulse width and a frequency are controlled in the duty control signal generating part 455, into first to k-th top driving signals and first to m-th bottom driving signals that are applied to the first light-emitting module 410 and the second light-emitting module 430, respectively.

In an exemplary embodiment, the duty control signal converting part 457 may include a converter which converts a direct current ("DC") voltage into an alternating current ("AC") voltage.

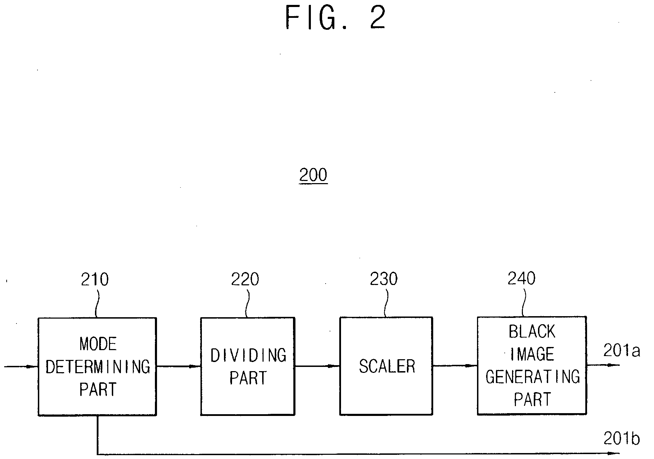

FIG. 2 is a block diagram illustrating an exemplary embodiment of the image converting part 200 of FIG 1.

Referring to FIGS. 1 and 2, the image converting part 200 includes a mode determining part 210, a dividing part 220, a scaler 230 and a black image generating part 240.

The mode determining part 210 determines a mode of the first image signal. In an exemplary embodiment, when the first image signal is the 3D image signal, the mode determining part 210 delivers the first image signal to dividing part 220, and the first image signal is thereby processed so that a first output image 201a is provided to the timing control part 300. When the first image signal is the 2D image signal, the mode determining part 210 may provide the first image signal as a second output image 201b directly to the timing control part 300.

When the first image signal is the 3D image signal, a left-eye image signal and a right-eye image signal are included in the 3D image signal. Thus, the dividing part 220 divides the first image signal received from the mode determining part 210 into the left-eye image signal and the right-eye image signal.

The scaler 230 converts resolutions of the left-eye image signal and the right-eye image signal received from the dividing part 220 to correspond to a resolution of the display panel 110, and then delivers the converted left-eye and right-eye image signals to the black image generating part 240.

The black image generating part 240 generates a black image. The black image generating part 240 inserts the black image between the left-eye image and the right-eye image received from the scaler 230 to generate the first output image 201a, and then outputs the first output image 201a to the timing control part 300.

When the first output image 201a or the second output image 201b is applied to the timing control part 300, the timing control part 300 controls a display timing of the first and second output images 201a and 201b, so that each of the first and second output images 201a and 201b is displayed to correspond to the display block DB of the display panel 110.

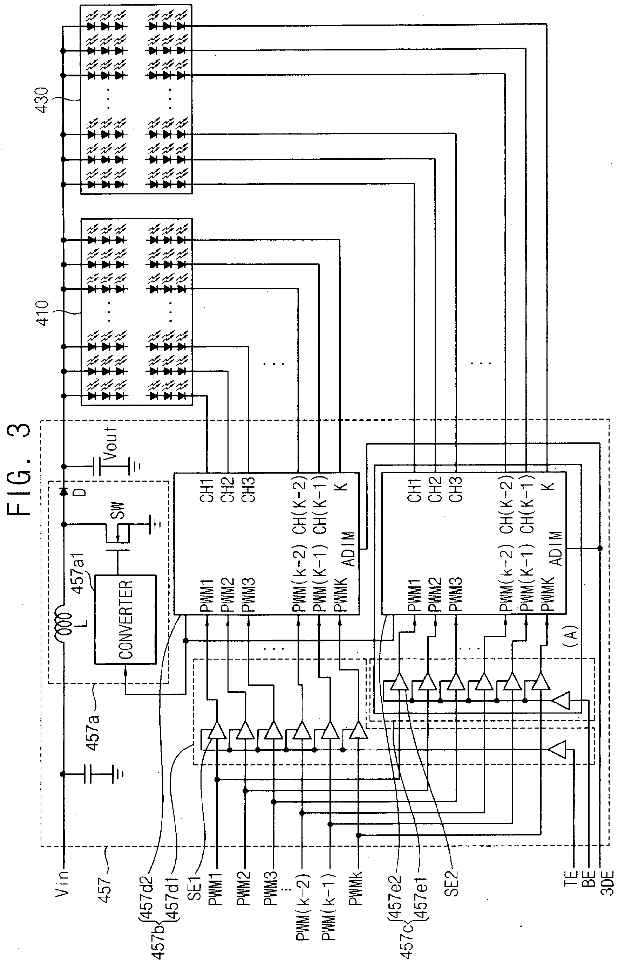

FIG. 3 is a schematic circuit diagram illustrating a first light-emitting module 410, a second light-emitting module 430 and a duty control signal converting part 457 of an exemplary embodiment of the light source module 400 in FIG. 1.

Referring to FIGS. 1 and 3, the duty control signal converting part 457 includes a boosting part 457a, a first converting part 457b and a second converting part 457c.

The boosting part 457a includes an inductor L, a diode D, a switching element SW and a converter 457a1.

The switching element SW is electrically connected to the inductor L, the diode D and the converter 457a1. The first light-emitting module 410 and the second light-emitting module 430 are connected to a cathode of the diode D. A first terminal of the inductor L and an anode of the diode D are connected to the converter 457a1 via the switching element SW. An output terminal of the boosting part 457a is commonly connected to anodes of light source blocks in which a plurality of light-emitting diodes is serially connected to one another. The converter 457a1 may convert the input voltage Vin into an output voltage Vout that is boosted.

Thus, when an input voltage Vin is applied to the inductor L, the input voltage Vin is boosted to be converted as the output voltage Vout, and the output voltage Vout may be provided to the first light-emitting module 410 and the second light-emitting module 430. In an exemplary embodiment, the input voltage Vin and the output voltage Vout may be DC voltages.

The first converting part 457b includes a first switching part 457d1 and a first driving part 457d2.

The second converting part 457c includes a second switching part 457e1 and a second driving part 457e2.

The first switching part 457d1 includes a plurality of first switches SE1, and the second switching part 457e1 includes a plurality of second switches SE2. In an exemplary embodiment, the first switching part 457d1 may include first to k-th switches, and the second switching part 457e1 may include first to m-th switches. Here, 'k' and 'm' are natural numbers. Hereinafter, a description for the first and second switching parts 457d1 and 457e1 will be described in greater detail with reference to an exemplary embodiment shown in FIG. 3 in which 'k' and 'm' are equal to each other. However, the numbers of switches in the first and second switching parts 457d1 and 457e1 are not limited to the exemplary embodiment shown in FIG 3. In an alternative exemplary embodiment, the numbers of switches in the first and second switching parts 457d1 and 457e1 may be different from each other, that is, 'k' and 'm' are not equal to each other.

The first switching part 457d1 and the second switching part 457e1 receive the first to k-th top duty control signals PWM1 to PWMk and the first to m-th bottom duty control signals PWM1 to PWMm, respectively, from the duty control signal generating part 455 of FIG. 1. In an exemplary embodiment, when 'm' and 'k' are equal to each other, the first to k-th top duty control signals PWM1 to PWMk may be applied to the first switching part 457d1 and the second switching part 457e1 in parallel, as shown in FIG 3.

The first switching part 457d1 may further receive a first enable signal TE, and the second switching part 457e1 may further receive a second enable signal BE.

The first switches SE1 of the first switching part 457d1 may provide the first driving part 457d2 with the first to k-th top duty control signals PWM1 to PWMk in response to the first enable signal TE. The second switches SE2 of the second switching part 457e1 may provide the second driving part 457e2 with the first to k-th top duty control signals PWM1 to PWMk in response to the second enable signal BE.

In an exemplary embodiment, the 3D image enable signal 3DE is applied to the first driving part 457d2 and the second driving part 457e2. The 3D image enable signal 3DE has a low value when the second image signal DS is a 2D image signal, and the 3D image enable signal 3DE has a high value when the second image signal DS is a 3D image signal.

The first enable signal TE and the second enable signal BE may have a high value when the second image signal DS is a 2D image signal, and the first enable signal TE and the second enable signal BE may have complementary values when the second image signal DS is a 3D image signal. In an exemplary embodiment, when the second image signal DS is the 3D image signal, the second enable signal BE has a low value and the first enable signal TE has a high value, or the second enable signal BE has a high value and the first enable signal TE has a low value.

The first driving part 457d2 and the second driving part 457e2 convert the first to k-th top duty control signals PWM1 to PWMk, provided from the first switching part 457d1 and the second switching part 457e1, into the first to k-th top driving signals and the first to m-th bottom driving signals that are applied to the first light-emitting module 410 and the second light-emitting module 430, respectively. In an embodiment, the first driving part 457d2 and the second driving part 457e2 may output k driving signals when 'k' and 'm' are equal to each other.

When the second image signal DS is the 2D image signal, the first light-emitting module 410 may receive the first to k-th top driving signals by the first enable signal TE having a high value, and the second light-emitting module 430 may receive the first to m-th bottom driving signals that are substantially equal to the first to k-th top driving signals by the second enable signal BE having a high value. Thus, the first light-emitting module 410 and the second light-emitting module 430 may perform a normal dimming driving.

When the second image signal DS is the 3D image signal, the first to k-th top duty control signals PWM1 to PWMk are complementarily provided to the first light-emitting module 410 and the second light-emitting module 430 as the first to k-th top driving signals and the first to m-th bottom driving signals. Thus, the display panel 110 may be driven to display a 3D image.

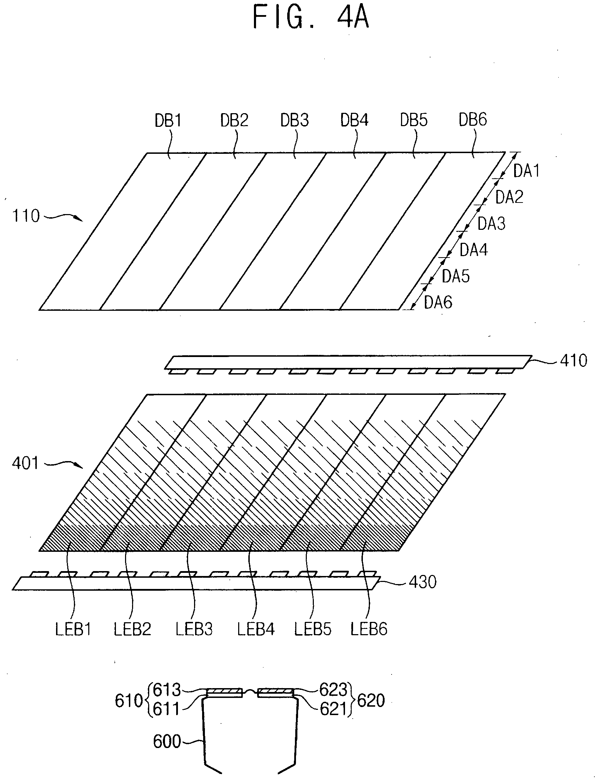

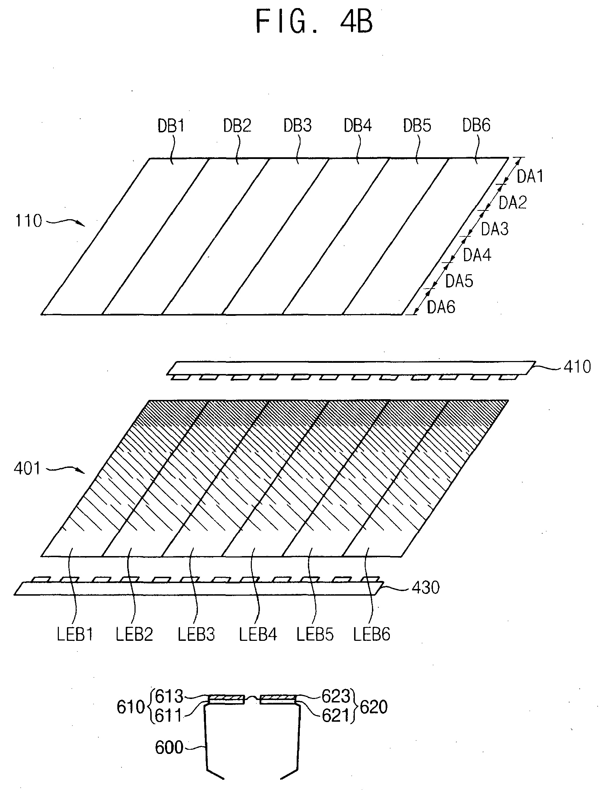

FIGS. 4A and 4B are perspective plan views illustrating a shutter glasses, a display panel, a light-guide plate, a first light-emitting module and a second light-emitting module that are used when a 3D image is displayed on the display apparatus of FIG 1.

Referring to FIGS. 1, 3, 4A and 4B, an exemplary embodiment of the display panel 110 may include a plurality of display blocks, e.g., a first display block DB1, a second display block DB2, a third display block DB3, a fourth display block DB4, a fifth display block DB5 and a sixth display block DB6. The left-eye image or the light-eye image may be sequentially displayed on the first to sixth display blocks DB1, DB2, DB3, DB4, DB5 and DB6.

Each of the first to sixth light-emitting blocks LEB1, LEB2, LEB3, LEB4, LEB5 and LEB6 included in the light source module 400 provides lights to each of the first to sixth display blocks DB1, DB2, DB3, DB4, DB5 and DB6 of the display panel 110. That is, the first to sixth light-emitting blocks LEB1, LEB2, LEB3, LEB4, LEB5 and LEB6 may correspond to the first to sixth display blocks DB1, DB2, DB3, DB4, DB5 and DB6, respectively. When 'k' and 'm' are equal to each other in an exemplary embodiment, the display blocks may be indicated as the first to k-th display blocks DB1 to DBk.

In an embodiment, the first to sixth light-emitting blocks LEB1, LEB2, LEB3, LEB4, LEB5 and LEB6 may be defined by a portion of the LGP 401 which emits lights, incident thereon from corresponding light source blocks of the first and second light-emitting modules 410 and 430, to a display panel 110.

The first light-emitting module 410 provides the first to sixth light-emitting blocks LEB1, LEB2, LEB3, LEB4, LEB5 and LEB6 with lights based on the first to sixth top driving signals, and the second light-emitting module 430 provides the first to sixth light-emitting blocks LEB1, LEB2, LEB3, LEB4, LEB5 and LEB6 with lights based on the first to sixth bottom driving signals.

In an exemplary embodiment, as shown in FIG. 4A, when the left-eye image is displayed on the first to sixth display blocks DB1, DB2, DB3, DB4, DB5 and DB6, the first light-emitting module 410 may be turned on and the second light-emitting module 430 may be turned off. Referring to FIG. 4B, when the left-eye image is displayed on the first to sixth display blocks DB1, DB2, DB3, DB4, DB5 and DB6, the second light-emitting module 430 may be turned on and the first light-emitting module 410 may be turned off.

That is, when the left-eye image of one frame unit is displayed on the first to sixth display blocks DB1, DB2, DB3, DB4, DB5 and DB6, the first light-emitting module 410 and the second light-emitting module 430 are alternately turned on and off.

When the first light-emitting module 410 is turned on, a relatively large amount of light is transmitted to a portion of the LGP 401 adjacent to the first light-emitting module 410, and a relatively small amount of light is transmitted to a portion of the LGP 401 adjacent to the second light-emitting module 430. Thus, a light amount of the LGP 401 may substantially gradually decrease from a portion adjacent to the first light-emitting module 410 to a portion adjacent to the second light-emitting module 430. When the second light-emitting module 430 is turned on, a relatively large amount of light is transmitted to the portion of the LGP 401 adjacent to the second light-emitting module 430, and a relatively small amount of light is transmitted to the portion of the LGP 401 adjacent to the first light-emitting module 410. Thus, the light amount of the LGP 401 may substantially gradually increase from the portion adjacent to the first light-emitting module 410 to the portion adjacent to the second light-emitting module 430.

The light source module 400 may further include an infrared light generating part (not shown). The infrared light generating part may include a plurality of infrared light sources, e.g., infrared LEDs, that generates infrared lights. The infrared light generating part may generate the infrared lights in response to a synchronization signal that may controls a driving of shutter glasses 600.

The shutter glasses 600 include a left-eye lens part 610 and a right-eye lens part 620. The left-eye lens part 610 includes a first lens 611 and a first shutter 613, and the right-eye lens part 620 includes a second lens 621 and a second shutter 623. The shutter glasses 600 open the first shutter 613 and close the second shutter 623 when the left-eye image is displayed on the display panel 110, and the shutter glasses 600 open the second shutter 623 and close the first shutter 613 when the right-eye image is displayed on the display panel 110.

As described above, an observer may view a left-eye frame image displayed on the display panel 110 during a single frame. Similarly, the observer may view a right-eye frame image displayed on the display panel 110 during a single.

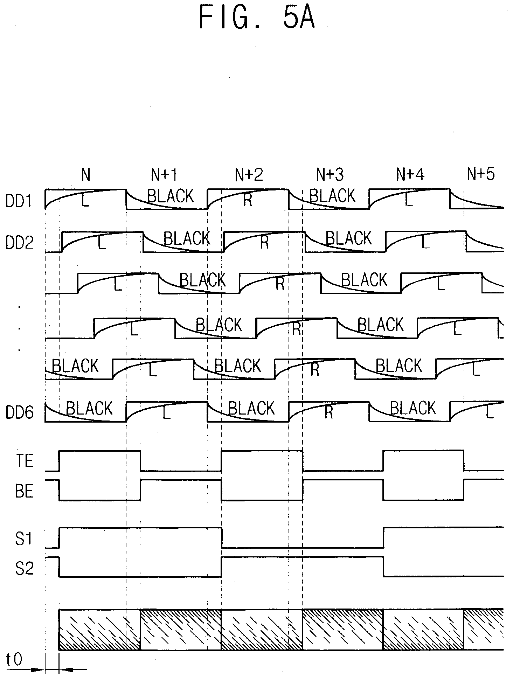

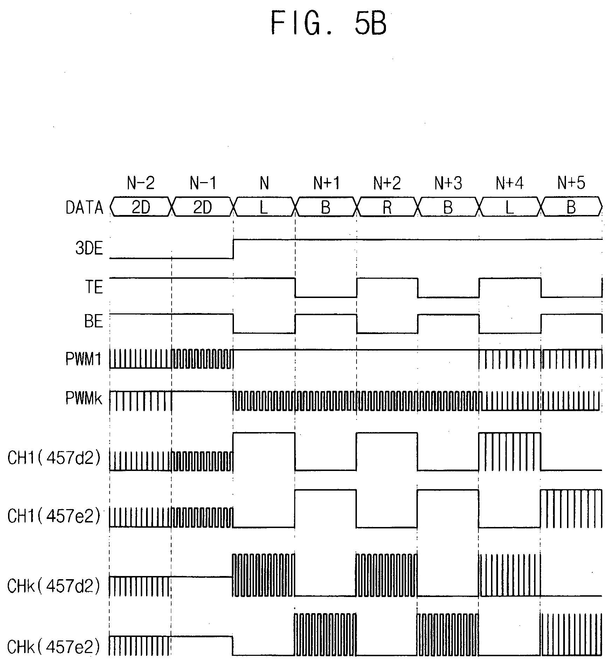

FIGS. 5A and 5B are signal timing diagrams of signals used in an exemplary embodiment of a driving method of first and second light-emitting modules of FIG. 1 and an exemplary embodiment of an image display method of a display apparatus using the driving method.

Referring to FIGS. 1, 4A and 5A, the display panel 110 may be divided into a first display area DA1, a second display area DA2, a third display area DA3, a fourth display area DA4, a fifth display area DA5 and a sixth display area DA6 based on a light amount of a corresponding portion of the LGP 401.

In an exemplary embodiment, the display panel 110 adjacent to the first light-emitting module 410 may be indicated as the first display area DA1, and the display panel 110 adjacent to the second light-emitting module 430 may be indicated as the sixth display area DA6. An area between the first and sixth display areas DA1 and DA6 may be defined as the second to fifth display areas DA2, DA3, DA4 and DA5

First to sixth image data DD1, DD2, DD3, DD4, DD5 and DD6 may be applied to the fist to sixth display areas DA1, DA2, DA3, DA4, DA5 and DA6, respectively.

In an exemplary embodiment, six image data, e.g., the first to sixth image data DD1, DD2, DD3, DD4, DD5 and DD6, are data provided to the first to sixth display areas DA1, DA2, DA3, DA4, DA5 and DA6 when the display panel 110 is divided into six display areas, e.g., the first to sixth display areas DA1, DA2, DA3, DA4, DA5 and DA6. However, the number of display areas is not limited thereto. In an exemplary embodiment, a plurality of gate lines may be divided into P groups ('P' is a natural number), and the image data DATA may be thereby divided into P display areas and P image data to correspond to the gate line groups.

Each of the first to sixth image data DD1, DD2, DD3, DD4, DD5 and DD6 alternately provides a left-eye image, a black image and a right-eye image on a display area.

In an exemplary embodiment, a left-eye image of a single frame of the first to sixth image data DD1, DD2, DD3, DD4, DD5 and DD6 is combined with a black image of a single frame and thereby provided to the first to sixth display areas DA1, DA2, DA3, DA4, DA5 and DA6 during an N-th frame and an (N+1)-th frame ('N' is a natural number). That is, as shown in FIGS. 1 and 5B, a left-eye image L included in the image data DATA is provided to the display panel 110 during the N-th frame, and a black image B included in the image data DATA is provided to the display panel 110 during the (N+1)-th frame.

The first to sixth image data DD1, DD2, DD3, DD4, DD5 and DD6 may be provided to the first to sixth display areas DA1, DA2, DA3, DA4, DA5 and DA6 of the display panel 110 in accordance with gate on signals sequentially generated at the gate driving part 134 of FIG. 1. Thus, as shown in FIG 5A, left-eye image signals corresponding to the first to sixth image data DD1, DD2, DD3, DD4, DD5 and DD6, respectively, may be sequentially shifted from the left-eye image signal corresponding to the first image data DD1 to the left-eye image signal corresponding to the sixth image data DD6. In an exemplary embodiment, the display apparatus may be driven at a frequency of about 120 Hz in correspondence with a 2D image of FIG. 5B, and may be driven at a frequency of about 240 Hz in correspondence with a 3D image.

Referring again to FIGS. 3, 4A and 5A, each of the first driving part 457d2 and the second driving part 457e2 may be integrated into a single driving chip in an exemplary embodiment. In an alternative exemplary embodiment, the first switching part 457d1 and the first driving part 457d2 may be integrated into a single chip, and the second switching part 457e1 and the second driving part 457e2 may be integrated into a single chip. In an exemplary embodiment, an interval of the left-eye image or the right-eye image of the one frame unit may be greater than an interval of the black image in correspondence with each of the first to k-th light-emitting blocks LEB, and a phase variation may be realized. Thus, a luminance decrease may be effectively prevented when the 3D image is displayed thereon.

When the first enable signal TE is in a high state, the light amount corresponding to the portion of the LGP 401 adjacent to the first light-emitting module 410 becomes large, and the light amount corresponding to the portion of the LGP 401 adjacent to the second light-emitting module 430 becomes small. In an exemplary embodiment, when the first enable signal TE is in the high state, the second light-emitting module 430 may be turned off

A first shutter signal S1 that opens the first shutter 613 is turned on during two frames in which the left-eye image and the black image are applied, and then turned off during two frames in which the right-eye image and the black image are applied. In an exemplary embodiment, the two frames may correspond to a unit period of the first enable signal TE or a unit period of the second enable signal BE, as shown in FIG. 5A.

In an exemplary embodiment, the first enable signal TE and the first shutter signal S1 may be synchronized with each other after a preset time t0 in response to a vertical start signal of a left-eye image signal included in the first image data DD1.

Referring again to FIGS. 4B and 5A, when the second enable signal BE is in a high state, the light amount corresponding to the portion of LGP 401 adjacent to the second light-emitting module 430 becomes large, and the light amount corresponding to the portion of LGP 401 adjacent to the first light-emitting module 410 becomes small. In an exemplary embodiment, when the second enable signal BE is in the high state, the first light-emitting module 410 may be turned off.

A second shutter signal S2 that opens the second shutter 623 is turned on during two frames in which the right-eye image and the black image are applied, and then turned off during two frames in which the left-eye image and the black image are applied. In an exemplary embodiment, the two frames may correspond to a unit period of the first enable signal TE or a unit period of the second enable signal BE.

In an exemplary embodiment, the second enable signal BE and the second shutter signal S2 may be synchronized with each other after the preset time t0 in response to a vertical start signal of the right-eye image signal included in the first image data DD1.

Referring again to FIGS. 3, 5A and 5B, an image data DATA is provided to the display panel 110. When the image data DATA correspond to a 2D image during an (N-2)-th frame and an (N-1)-th frame, the 3D image enable signal 3DE has a low value and the first enable signal TE and the second enable signal BE have a high value.

Thus, the first converting part 457b and the second converting part 457c may output the first to k-th top duty control signals PWM1 to PWMk as the first to k-th top driving signals and the first to m-th bottom driving signals. In an exemplary embodiment, the first and k-th top duty control signals PWM1 and PWMk may be substantially equal to signals of a first channel CH1 of the first driving part 457d2 and a k-th channel CHk of the first driving part 457d2, respectively. The first and k-th top duty control signals PWM1 and PWMk may be substantially equal to signals of a first channel CH1 of the second driving part 457e2 and a k-th channel CHk of the second driving part 457e2, respectively.

Referring again to FIG. 5B, a left image may be applied during an N-th frame and an (N+4)-th frame, and a right image may be applied during an (N+2)-th frame. A black image may be applied during an (N+1)-th frame, an (N+3)-th frame and an (N+5)-th frame.

Since the image data DATA correspond to the left-eye image or the right-eye image during a first interval, e.g., an N-th frame, an (N+2)-th frame and an (N+4)-th frame, the 3D image enable signal 3DE has a high value, the first enable signal TE has a high value and the second enable signal BE has a low value.

Thus, the first converting part 457b may output the first to k-th top duty control signals PWM1 to PWMk, while the second converting part 457c may output a signal having a low value. In an exemplary embodiment, signals outputted through the first channel CH1 of the first driving part 457d2 and the k-th channel CHk of the first driving part 457d2 are the first and k-th top duty control signals PWM1 and PWMk in accordance with the N-th frame, the (N+2)-th frame and the (N+4)-th frame. In this case, the first and k-th top duty control signals PWM1 and PWMk may be boosted about twice to be outputted therethrough. Since the first and k-th top duty control signals PWM1 and PWMk are boosted, a luminance may be compensated, which is decreased due to the black image inserted in the image data DATA when a 3D image is displayed thereon. In contrast, signals outputted through the first channel CH1 of the second driving part 457e2 and the k-th channel CHk of the second driving part 457e2 have a low value in accordance with the N-th frame, the (N+2)-th frame and the (N+4)-th frame.

Since the image data DATA corresponds to the black image during a second interval, e.g., an (N+1)-th frame, an (N+3)-th frame and an (N+5)-th frame, the 3D enable signal 3DE has a high value, the first enable signal TE has a low value and the second enable signal BE has a high value.

Thus, the second converting part 457c outputs the first to k-th top duty control signals PWM1 to PWMk, while the first converting part 457b outputs a signal having a low value. In an exemplary embodiment, signals outputted through the first channel CH1 of the second driving part 457e2 and the k-th channel CHk of the second driving part 457e2 are the first and k-th top duty control signals PWM1 and PWMk in accordance with the (N+1)-th frame, the (N+3)-th frame and the (N+5)-th frame. In this case, the first and k-th top duty control signals PWM1 and PWMk may be boosted about twice to be outputted therethrough. Since the first and k-th top duty control signals PWM1 and PWMk are boosted, a luminance may be compensated, which is decreased due to the black image inserted in the image data DATA when a 3D image is displayed thereon. In contrast, signals outputted through the first channel CH1 of the first driving part 457d2 and the k-th channel CHk of the first driving part 457d2 have a low value in accordance with the (N+1)-th frame, the (N+3)-th frame and the (N+5)-th frame.

Therefore, the first light-emitting module 410 and the second light-emitting module 430 are alternately turned on and off during the first interval and the second interval, so that the first and second light-emitting modules 410 and 430 may perform a blinking operation.

Similarly to the first shutter signal S1, the first enable signal TE may be substantially synchronized with the first image data DD1 after the preset time t0 in response to a vertical start signal of a left-eye image included in the first image data DD1. Similarly to the second shutter signal S2, the second enable signal BE may be substantially synchronized with the first image data DD1 after the preset time t0 in response to a vertical start signal of a right-eye image included in the first image data DD1.

According to exemplary embodiments, when a 3D image is displayed thereon, lights may not be provided to the display panel 110 during the preset time t0 in response to a vertical start signal of the left-eye image and the right-eye image. The light source module 400 may be driven in a dimming driving method in accordance with an image data corresponding to the plurality of display blocks, e.g., the first to sixth display blocks DB1, DB2, DB3, DB4, DB5 and DB6, and the left-eye image and the right-eye image, between which the black image is inserted, may be sequentially displayed thereon. Thus, although the black image is not completely realized on the display panel 110, a crosstalk generated due to a slow response of liquid crystal molecules is effectively prevented.

According to exemplary embodiments, the duty control signal converting part 457, included in a light source module in a one-dimensional dimming mode, receives the first to k-th top duty control signals PWM1 to PWMk in parallel, so that a logic part for a serial communication may be omitted. Thus, a circuit structure of the light source module may be simplified, and a blinking operation that reduces a crosstalk of a shutter type 3D image is realized without additional costs, so that manufacturing costs of the display apparatus may be effectively reduced.

According to exemplary embodiments of the present invention as described above, a first light-emitting module and a second light-emitting modules including edge type LEDs are driven using first to k-th top duty control signals, applied to a display apparatus in parallel, so that the display apparatus may be driven in a dimming driving mode. Thus, the display apparatus may display a 3D image with substantially reduced crosstalk, so that a display quality of the display apparatus is substantially improved and manufacturing costs of the display apparatus is substantially reduced.

The foregoing is illustrative of the present invention and is not to be construed as limiting thereof. Although a few exemplary embodiments of the present invention have been described, those skilled in the art will readily appreciate that many modifications are possible in the exemplary embodiments without materially departing from the novel teachings and advantages of the present invention. Accordingly, all such modifications are intended to be included within the scope of the present invention as defined in the claims. In the claims, means-plus-function clauses are intended to cover the structures described herein as performing the recited function and not only structural equivalents but also equivalent structures. Therefore, it is to be understood that the foregoing is illustrative of the present invention and is not to be construed as limited to the specific exemplary embodiments disclosed, and that modifications to the disclosed exemplary embodiments, as well as other exemplary embodiments, are intended to be included within the scope of the appended claims. The present invention is defined by the following claims.

## Claims

1. A display apparatus comprising:
a display panel which selectively displays a 2D image and a 3D image in response to a three-dimensional image enable signal,; and
a light source module comprising:
a first light-emitting module comprising first to k-th top light source blocks disposed adjacent to a first edge of a light guide plate, wherein k is a natural number;
a second light-emitting module comprising first to m-th bottom light source blocks disposed adjacent to a second edge of the light guide plate, wherein m is a natural number, and the second edge is disposed opposite to the first edge; and
a light source driving part which generates first to k-th top duty control signals and first to m-th bottom duty control signals based on an image to be displayed, and selectively generates first to k-th top driving signals and first to m-th bottom driving signals using the first to k-th duty control signals and the first to m-th duty control signals, in response to a first enable signal and a second enable signal, respectively,
wherein the first to k-th top duty control signals correspond to the first to k-th top light source blocks, and the first to m-th bottom duty control signals correspond to the first to m-th bottom light source blocks, and
wherein the first to k-th top driving signals drive the first light-emitting module, and the first to m-th bottom driving signals drive the second light-emitting module,
wherein the first and second enable signals have different values during a same period to turn on a corresponding light source block of the first light-emitting module and turn off a corresponding light source block of the second light-emitting module, when a 3D image is displayed in response to a first level of the three-dimensional image enable signal,
and wherein the first and second enable signals have a same value during a same period when a 2D image is displayed in response to a second level of the three-dimensional image enable signal.

2. The display apparatus of claim 1, further comprising a pair of shutter glasses (600) including a first shutter (613) and a second shutter (623),
wherein the display panel (110) displays an image for a plurality of frames that divided into a first interval and a second interval, which are alternately continued,
wherein the display panel (110) displays a first image during an N-th frame included in the first interval and an (N+1)-th frame included in the second interval, and displays a second image during an (N+2)-th frame included in the first interval and an (N+3)-th frame included in the second interval, wherein N is a natural number,
the first shutter (613) is opened and the second shutter (623) is closed in correspondence with the N-th frame and the (N+1)-th frame, and
the first shutter (613) is closed and the second shutter (623) is opened in correspondence with the (N+2)-th frame and the (N+3)-th frame.

3. The display apparatus of claim 2, wherein
the shutter glasses (600) open and close the first shutter (613) after a preset time in response to a vertical start signal of a left-eye image (L) of the first image, and
the shutter glasses (600) open and close the second shutter (623) after the preset time in response to a vertical start signal of a right-eye image (R) of the second image.

4. The display apparatus of claim 2, wherein the light source driving part (450) comprises:
a dimming level determining part (453) which determines first to k-th top duty ratios and first to m-th bottom duty ratios using the first image and the second image; and
a duty control signal generating part (455) which generates the first to k-th top duty control signals and the first to m-th bottom duty control signals using the first to k-th top duty ratios and the first to m-th bottom duty ratios.

5. The display apparatus of claim 4, wherein the dimming control part (451) comprises:
an image analyzing part (452) which obtains a representative luminance value by analyzing the first image corresponding to the first to k-th top light source blocks and the second image corresponding to the first to m-th bottom light source blocks; and
a dimming level determining part (453) which determines the first to k-th top duty ratios and the first to m-th bottom duty ratios using the representative luminance value,
wherein the first to k-th top duty ratios control a brightness of the first to k-th top light source blocks, and the first to m-th bottom duty ratios control a brightness of the first to m-th bottom light source blocks.

6. The display apparatus of claim 4, wherein the duty control signal generating part (455) comprises:
a first converting part (457b) which generates the first to k-th top driving signals using the first to k-th top duty control signals when a three-dimensional image enable signal (3DE) has a low level, and generate the first to k-th top driving signals using the first to k-th top duty control signals during the first interval when the three-dimensional image enable signal (3DE) has a high level; and
a second converting part (457c) which generates the first to m-th bottom driving signals using the first to m-th bottom duty control signals when the three-dimensional image enable signal (3DE) has a low level, and generates the first to m-th bottom driving signals using the first to m-th bottom duty control signals during the second interval when the three-dimensional image enable signal (3DE) has a high level.

7. The display apparatus of claim 6, wherein the first converting part (457b) comprises:
a first switching part (457d1) which transmits the first to k-th top duty control signals in response to the first enable signal, and blocks the first to k-th top duty control signals in response to the second enable signal, wherein the first enable signal has a high level in correspondence with the first interval, and the second enable signal has a high level in correspondence with the second interval; and
a first driving part (457d2) which generates the first to k-th top driving signals using the first to k-th top duty control signals provided from the first switching part (457d1), and drives the first light-emitting module (410).

8. The display apparatus of claim 7, wherein the second converting part (457c) comprises:
a second switching part (457e1) which transmits the first to m-th bottom duty control signals in response to the second enable signal, and blocks the first to m-th bottom duty control signals in response to the first enable signal, wherein the first enable signal has a high level in correspondence with the first interval, and the second enable signal has a high level in correspondence with the second interval; and
a second driving part (457e2) which generates the first to m-th bottom driving signals using the first to m-th bottom duty control signals provided from the second switching part (457e1), and drives the second light-emitting module (430).

9. The display apparatus of claim 8, wherein:
the first switching part (457d1) comprises first to k-th switches; and
the second switching part (457e1) comprises first to m-th switches.

10. The display apparatus of claim 8, wherein each of the first driving part (457d2) and the second driving part (457e2) boosts the first to k-th top duty control signals and the first to m-th bottom duty control signals, respectively, in response to the three-dimensional image enable signal (3DE).

11. The display apparatus of claim 8, wherein the first enable signal is synchronized with a first image data of the first image after a preset time in response to a vertical start signal of a left-eye image (L) included in the first image, and
the second enable signal is synchronized with a first image data of the second image after the preset time in response to a vertical start signal of a right-eye image (R) included in the second image.

12. The display apparatus of claim 2, wherein:
the first image comprises a left-eye image (L) and a black image (BLACK),
the second image comprises a right-eye image (R) and the black image (BLACK),
the left-eye image (L) included in the first image is sequentially displayed on first to k-th display blocks of the display panel (110) during the N-th frame and the (N+1)-th frame, and
the right-eye image (R) included in the second image is sequentially displayed on the first to k-th display blocks of the display panel (110) during the (N+2)-th frame and the (N+3)-th frame.

## Patentansprüche

1. Anzeigevorrichtung, umfassend:
ein Anzeigepanel, das wahlweise ein 2D-Bild und ein 3D-Bild als Reaktion auf ein 3D-Bild-Freigabesignal anzeigt, und
ein Lichtquellenmodul, umfassend:
ein erstes Leuchtmodul, umfassend erste bis k-te obere Lichtquellenblöcke, die benachbart einem ersten Rand einer Lichtleitplatte angeordnet sind, wobei k eine natürliche Zahl ist;
ein zweites Leuchtmodul, umfassend erste bis m-te untere Lichtquellenblöcke, die benachbart einem zweiten Rand einer Lichtleitplatte angeordnet sind, wobei n eine natürliche Zahl ist und der zweite Rand gegenüber dem ersten Rand angeordnet ist, und
einen Lichtquellensteuerabschnitt, der erste bis k-te obere Betriebssignale und erste bis m-te untere Betriebssignale auf Basis eines anzuzeigenden Bildes erzeugt, und wahlweise erste bis k-te obere Ansteuersignale und erste bis m-te untere Ansteuersignale anhand der ersten bis k-ten Betriebssignale und der ersten bis m-ten Betriebssignale als Reaktion auf ein erstes bzw. zweites Freigabesignal erzeugt,
wobei die ersten bis k-ten oberen Betriebssignale den ersten bis k-ten oberen Lichtquellenblöcken entsprechen, und die ersten bis m-ten unteren Betriebssignale den ersten bis m-ten unteren Lichtquellenblöcken entsprechen, und
wobei die ersten bis k-ten oberen Ansteuersignale das erste Leuchtmodul ansteuern und die ersten bis m-ten unteren Ansteuersignale das zweite Leuchtmodul ansteuern,
wobei die ersten und zweiten Freigabesignale während eines gleichen Zeitraums unterschiedliche Werte aufweisen, um einen entsprechenden Lichtquellenblock des ersten Leuchtmoduls einzuschalten und einen entsprechenden Lichtquellenblock des zweiten Leuchtmoduls auszuschalten, wenn ein 3D-Bild als Reaktion auf einen ersten Pegel des 3D-Bild-Freigabesignals angezeigt wird, und wobei die ersten und zweiten Freigabesignale während eines gleichen Zeitraums einen gleichen Wert aufweisen, wenn ein 2D-Bild als Reaktion auf einen zweiten Pegel des 3D-Bild-Freigabesignals angezeigt wird.

2. Anzeigevorrichtung nach Anspruch 1, ferner umfassend eine Shutterbrille (600) mit einem ersten Verschluss (613) und einem zweiten Verschluss (623),
wobei das Anzeigepanel (110) ein Bild für eine Vielzahl von Halbbildern anzeigt, unterteilt in ein erstes und ein zweites Intervall, die abwechselnd fortgesetzt werden,
wobei das Anzeigepanel (110) ein erstes Bild während eines N-ten Halbbildes, das in dem ersten Intervall enthalten ist, und während eines (N+1)-ten Halbbildes, das in dem zweiten Intervall enthalten ist, anzeigt, und
ein zweites Bild während eines (N+2)-ten Halbbildes, das in dem ersten Intervall enthalten ist, und während eines (N+3)-ten Halbbildes, das in dem zweiten Intervall enthalten ist, anzeigt, wobei N eine natürliche Zahl ist,
entsprechend dem N-ten Halbbild und dem (N+1)-ten Halbbild der erste Verschluss (613) geöffnet und der zweite Verschluss (623) geschlossen wird, und entsprechend dem (N+2)-ten Halbbild und dem (N+3)-ten Halbbild der erste Verschluss (613) geschlossen und der zweite Verschluss (623) geöffnet wird.

3. Anzeigevorrichtung nach Anspruch 2, wobei
die Shutterbrille (600) den ersten Verschluss (613) nach einer vorgegebenen Zeit als Reaktion auf ein vertikales Startsignal eines linksäugigen Bildes (L) des ersten Bildes öffnet und schließt, und
die Shutterbrille (600) den zweiten Verschluss (623) nach einer vorgegebenen Zeit als Reaktion auf ein vertikales Startsignal eines rechtsäugigen Bildes (R) des zweiten Bildes öffnet und schließt.

4. Anzeigevorrichtung nach Anspruch 2, wobei der Lichtquellenansteuerabschnitt (450) umfasst:
einen Abblendpegelbestimmungsabschnitt (453), der erste bis k-te obere relative Einschaltdauern und erste bis m-te untere relative Einschaltdauern anhand des ersten und des zweiten Bildes bestimmt, und
einen Betriebssignal-Erzeugungsabschnitt (455), der die ersten bis k-ten oberen Betriebssignale und die ersten bis m-ten unteren Betriebssignale anhand der ersten bis k-ten oberen relativen Einschaltdauern und der ersten bis m-ten unteren relativen Einschaltdauern erzeugt.

5. Anzeigevorrichtung nach Anspruch 4, wobei der Abblendsteuerabschnitt (451) umfasst:
einen Bildanalyseabschnitt (452), der einen repräsentativen Leuchtdichtewert durch Analyse des ersten Bildes, das den ersten bis k-ten oberen Lichtquellenblöcken entspricht, und des zweiten Bildes, das den ersten bis m-ten unteren Lichtquellenblöcken entspricht, erhält, und
einen Abblendpegelbestimmungsabschnitt (453), der die ersten bis k-ten oberen relativen Einschaltdauern und die ersten bis m-ten unteren relativen Einschaltdauern anhand des repräsentativen Leuchtdichtewertes bestimmt,
wobei die ersten bis k-ten oberen relativen Einschaltdauern eine Helligkeit der ersten bis k-ten oberen Lichtquellenblöcke steuern, und die ersten bis m-ten unteren relativen Einschaltdauern eine Helligkeit der ersten bis m-ten unteren Lichtquellenblöcke steuern.

6. Anzeigevorrichtung nach Anspruch 4, wobei der Betriebssignalerzeugungsabschnitt (455) folgendes umfasst:
einen ersten Umwandlungsabschnitt (457b), der die ersten bis k-ten oberen Ansteuersignale anhand der ersten bis k-ten oberen Betriebssignale erzeugt, wenn ein 3D-Bild-Freigabesignal (3DE) einen niedrigen Pegel aufweist, und die ersten bis k-ten oberen Ansteuersignale anhand der ersten bis k-ten oberen Betriebssignale während des ersten Intervalls erzeugt, wenn das 3D-Bild-Freigabesignal (3DE) einen hohen Pegel aufweist, und
einen zweiten Umwandlungsabschnitt (457c), der die ersten bis m-ten unteren Ansteuersignale anhand der ersten bis m-ten unteren Betriebssignale erzeugt, wenn das 3D-Bild-Freigabesignal (3DE) einen niedrigen Pegel aufweist, und die ersten bis m-ten unteren Ansteuersignale anhand der ersten bis m-ten unteren Betriebssignale während des zweiten Intervalls erzeugt, wenn das 3D-Bild-Freigabesignal (3DE) einen hohen Pegel aufweist.

7. Anzeigevorrichtung nach Anspruch 6, wobei der erste Umwandlungsabschnitt (457b) umfasst:
einen ersten Schaltabschnitt (457d1), der die ersten bis k-ten oberen Betriebssignale als Reaktion auf das erste Freigabesignal überträgt und die ersten bis k-ten oberen Betriebssignale als Reaktion auf das zweite Freigabesignal blockiert, wobei das erste Freigabesignal einen hohen Pegel, entsprechend dem ersten Intervall, und das zweite Freigabesignal einen hohen Pegel, entsprechend dem zweiten Intervall, aufweist, und
einen ersten Ansteuerabschnitt (457d2), der die ersten bis k-ten oberen Ansteuersignale anhand der ersten bis k-ten oberen Betriebssignale erzeugt, die von dem ersten Schaltabschnitt (457d1) geliefert werden, und das erste Leuchtmodul (410) ansteuert.

8. Anzeigevorrichtung nach Anspruch 7, wobei der zweite Umwandlungsabschnitt (457c) umfasst:
einen zweiten Schaltabschnitt (457e1), der die ersten bis m-ten unteren Betriebssignale als Reaktion auf das zweite Freigabesignal überträgt und die ersten bis m-ten unteren Betriebssignale als Reaktion auf das erste Freigabesignal blockiert, wobei das erste Freigabesignal einen hohen Pegel, entsprechend dem ersten Intervall, und das zweite Freigabesignal einen hohen Pegel, entsprechend dem zweiten Intervall, aufweist, und
einen zweiten Ansteuerabschnitt (457e2), der die ersten bis m-ten unteren Ansteuersignale anhand der ersten bis m-ten unteren Betriebssignale erzeugt, die von dem zweiten Schaltabschnitt (457e1) geliefert werden, und das zweite Leuchtmodul (430) ansteuert.

9. Anzeigevorrichtung nach Anspruch 8, wobei:
der erste Schaltabschnitt (457d1) erste bis k-te Schalter umfasst, und der zweite Schaltabschnitt (457e1) erste bis m-te Schalter umfasst.

10. Anzeigevorrichtung nach Anspruch 8, wobei der erste Ansteuerabschnitt (457d2) und der zweite Ansteuerabschnitt (457e2) jeweils die ersten bis k-ten oberen Betriebssignale bzw. die ersten bis m-ten unteren Betriebssignale als Reaktion auf das 3D-Bild-Freigabesignal (3DE) verstärken.

11. Anzeigevorrichtung nach Anspruch 8, wobei das erste Freigabesignal mit ersten Bilddaten des ersten Bildes nach einer vorgegebenen Zeit als Reaktion auf ein vertikales Startsignal eines linksäugigen Bildes (L), das in dem ersten Bild enthalten ist, synchronisiert, und
das zweite Freigabesignal mit ersten Bilddaten des zweiten Bildes nach der vorgegebenen Zeit als Reaktion auf ein vertikales Startsignal eines rechtsäugigen Bildes (R), das in dem zweiten Bild enthalten ist, synchronisiert.

12. Anzeigevorrichtung nach Anspruch 2, wobei:
das erste Bild ein linksäugiges Bild (L) und ein schwarzes Bild (BLACK) umfasst, das zweite Bild ein rechtsäugiges Bild (R) und ein schwarzes Bild (BLACK) umfasst,
das in dem ersten Bild enthaltene, linksäugige Bild (L) nacheinander auf ersten bis k-ten Anzeigeblöcken des Anzeigepanels (110) während des N-ten Halbbildes und des (N+1)-ten Halbbildes angezeigt wird, und
das in dem zweiten Bild enthaltene, rechtsäugige Bild (R) nacheinander auf ersten bis k-ten Anzeigeblöcken des Anzeigepanels (110) während des (N+2)-ten Halbbildes und des (N+3)-ten Halbbildes angezeigt wird.

## Revendications

1. Un appareil d'affichage comprenant :
Un panneau d'affichage qui affiche de façon sélective une image en 2D et une image en 3D en réponse à un signal d'activation d'une image en trois dimensions ; et
Un module de source de lumière comprenant :
Un premier module émettant de la lumière comprenant du premier au k^{ième} blocs de source de lumière supérieurs disposés de façon adjacente à un premier angle d'une plaque guide de lumière, où k est un nombre naturel ;
Un deuxième module émettant de la lumière comprenant du premier au m^{ième} blocs de source de lumière inférieurs disposés de façon adjacente à un deuxième angle de la plaque guide de lumière, où m est un nombre naturel, et le deuxième angle est disposé à l'opposé du premier angle ; et
Une partie entraînant la source de lumière qui génère du premier au k^{ième} signaux de contrôle de service supérieurs et du premier au m^{ième} signaux de contrôle de service inférieurs basés sur une image à afficher, et qui génère de façon sélective du premier au k^{ième} signaux d'entraînement supérieurs et du premier au m^{ième} signaux d'entraînement inférieurs utilisant le premier au k^{ième} signaux de contrôle de service et le premier au m^{ième} signaux de contrôle de service en réponse à un premier signal d'activation et un deuxième signal d'activation, respectivement,
Où le premier au k^{ième} signaux de contrôle de service supérieurs correspondent au premier au k^{ième} blocs de source de lumière supérieurs, et le premier au m^{ième} signaux de contrôle de service inférieurs correspondent au premier au m^{ième} blocs de source de lumière inférieurs, et
Où le premier au k^{ième} signaux d'entraînement supérieurs entraînent le premier module émettant de la lumière, et le premier au m^{ième} signaux d'entraînement inférieurs entraînent le deuxième module émettant de la lumière,
Où les premiers et deuxièmes signaux d'activation ont différentes valeurs pendant une même période pour allumer un bloc de source de lumière correspondant du premier module émettant de la lumière et pour éteindre un bloc de source de lumière correspondant du deuxième module émettant de la lumière, lorsqu'une image en 3D est affichée en réponse à un premier niveau du signal d'activation de l'image en trois dimensions,
Et où les premiers et deuxièmes signaux d'activation ont une même valeur pendant une même période lorsqu'une image en 2D est affichée en réponse à un deuxième niveau du signal d'activation de l'image en trois dimensions.

2. L'appareil d'affichage de la revendication 1, comprenant de plus une paire de lunettes à volet (600) incluant un premier volet (613) et un deuxième volet (623), Où le panneau d'affichage (110) affiche une image pour une pluralité de cadres qui sont divisés en un premier intervalle et un deuxième intervalle, qui continuent de façon alternative,
Où le panneau d'affichage (110) affiche une première image pendant un N^{ième} cadre inclus dans le premier intervalle et un (N+1)^{ième} cadre inclus dans le deuxième intervalle, et affiche une deuxième image pendant un (N+2)^{ième} cadre inclus dans le premier intervalle et un (N+3)^{ième} cadre inclus dans le deuxième intervalle, où N est un nombre naturel,
Le premier volet (613) est ouvert et le deuxième volet (623) est fermé correspondant au N^{ième} cadre et au (N+1)^{ième} cadre, et
Le premier volet (613) est fermé et le deuxième volet (623) est ouvert correspondant au (N+2)^{ième} cadre et au (N+3)^{ième} cadre.

3. L'appareil d'affichage de la revendication 2, où
Les lunettes à volet (600) ouvrent et ferment le premier volet (613) après un temps prédéterminé en réponse à un signal de démarrage vertical d'une image de l'oeil gauche (L) de la première image, et
Les lunettes à volet (600) ouvrent et ferment le deuxième volet (623) après le temps prédéterminé en réponse à un signal de démarrage vertical d'une image de l'oeil droit (R) de la deuxième image.

4. L'appareil d'affichage de la revendication 2, où la partie entraînant la source de lumière (450) comprend :
Une partie déterminant le niveau de gradation (453) qui détermine le premier au k^{ième} taux de service supérieurs et le premier au m^{ième} taux de service inférieurs à l'aide de la première et de la deuxième images, et
Une partie générant un signal de contrôle de service (455) qui génère le premier au k^{ième} signaux de contrôle de service supérieurs et le premier au m^{ième} signaux de contrôle de service inférieurs à l'aide du premier au k^{ième} taux de service supérieurs et du premier au m^{ième} taux de service inférieurs.

5. L'appareil d'affichage de la revendication 4, où la partie de contrôle de la gradation (451) comprend :
Une partie d'analyse d'image (452) qui obtient une valeur de luminance représentative en analysant la première image correspondant au premier au k^{ième} blocs de source de lumière supérieurs et la deuxième image correspondant au premier au m^{ième} blocs de source de lumière inférieurs ; et
Une partie déterminant le niveau de gradation (453) qui détermine le premier au k^{ième} taux de service supérieurs et le premier au m^{ième} taux de service inférieurs à l'aide de la valeur de luminance représentative,
Où le premier au k^{ième} taux de service supérieurs contrôlent une luminosité du premier au k^{ième} blocs de source de lumière supérieurs, et le premier au m^{ième} taux de service inférieurs contrôlent une luminosité du premier au m^{ième} blocs de source de lumière inférieurs.

6. L'appareil d'affichage de la revendication 4, où la partie générant le signal de contrôle de service (455) comprend :
Une première partie de conversion (457b) qui génère le premier au k^{ième} signaux d'entraînement supérieurs à l'aide du premier au k^{ième} signaux de contrôle de service supérieurs lorsqu'un signal d'activation d'une image en trois dimensions (3DE) possède un niveau bas, et qui génère le premier au k^{ième} signaux d'entraînement supérieurs à l'aide du premier au k^{ième} signaux de contrôle de service supérieurs pendant le premier intervalle lorsque le signal d'activation d'une image en trois dimensions (3DE) possède un niveau élevé ; et
Une deuxième partie de conversion (457c) qui génère le premier au m^{ième} signaux d'entraînement inférieurs à l'aide du premier au m^{ième} signaux de contrôle de service inférieurs lorsque le signal d'activation d'une image en trois dimensions (3DE) possède un niveau bas, et qui génère le premier au m^{ième} signaux d'entraînement inférieurs à l'aide du premier au m^{ième} signaux de contrôle de service inférieurs pendant le deuxième intervalle lorsque le signal d'activation d'une image en trois dimensions (3DE) possède un niveau élevé.

7. L'appareil d'affichage de la revendication 6, où la première partie de conversion (457b) comprend :
Une première partie de commutation (457d1) qui transmet le premier au k^{ième} signaux de contrôle de service supérieurs en réponse au premier signal d'activation, et bloque le premier au k^{ième} signaux de contrôle de service supérieurs en réponse au deuxième signal d'activation, où le premier signal d'activation possède un niveau élevé correspondant au premier intervalle, et le deuxième signal d'activation possède un niveau élevé correspondant au deuxième intervalle ; et
Une première partie d'entraînement (457d2) qui génère le premier au k^{ième} signaux d'entraînement supérieurs à l'aide du premier au k^{ième} signaux de contrôle de service supérieurs venant de la première partie de commutation (457d1), et entraîne le premier module émettant de la lumière (410).

8. L'appareil d'affichage de la revendication 7, où la deuxième partie de conversion (457c) comprend :
Une deuxième partie de commutation (457e1) qui transmet le premier au m^{ième} signaux de contrôle de service inférieurs en réponse au deuxième signal d'activation, et bloque le premier au m^{ième} signaux de contrôle de service inférieurs en réponse au premier signal d'activation, où le premier signal d'activation possède un niveau élevé correspondant au premier intervalle, et le deuxième signal d'activation possède un niveau élevé correspondant au deuxième intervalle ; et
Une deuxième partie d'entraînement (457e2) qui génère le premier au m^{ième} signaux d'entraînement inférieurs à l'aide du premier au m^{ième} signaux de contrôle de service inférieurs venant de la deuxième partie de commutation (457e1), et entraîne le deuxième module émettant de la lumière (430).

9. L'appareil d'affichage de la revendication 8, où :
La première partie de commutation (457d1) comprend un premier au k^{ième} commutateurs ; et
La deuxième partie de commutation (457e1) comprend un premier au m^{ième} commutateurs.

10. L'appareil d'affichage de la revendication 8, où chacune des premières parties d'entraînement (457d2) et deuxièmes parties d'entraînements (457e2) augmente le premier au k^{ième} signaux de contrôle de service supérieurs et le premier au m^{ième} signaux de contrôle de service inférieurs, respectivement, en réponse au signal d'activation d'une image en trois dimensions (3DE).

11. L'appareil d'affichage de la revendication 8, où le premier signal d'activation est synchronisé avec des premières données d'image de la première image après un temps prédéterminé en réponse à un signal de démarrage vertical d'une image de l'oeil gauche (L) inclus dans la première image, et
Le deuxième signal d'activation est synchronisé avec des premières données d'image de la deuxième image après le temps prédéterminé en réponse à un signal de démarrage vertical d'une image de l'oeil droit (R) inclus dans la deuxième image.

12. L'appareil d'affichage de la revendication 2, où :
La première image comprend une image d'oeil gauche (L) et une image noire (BLACK),
La deuxième image comprend une image d'oeil droit (R) et l'image noire (BLACK),
L'image de l'oeil gauche (L) incluse dans la première image est affichée de façon séquentielle sur le premier au k^{ième} blocs d'affichage du panneau d'affichage (110) pendant le N^{ième} cadre et le (N+1)^{ième} cadre, et
L'image de l'oeil droit (R) incluse dans la deuxième image est affichée de façon séquentielle sur le premier au k^{ième} blocs d'affichage du panneau d'affichage (110) pendant le (N+2)^{ième} cadre et le (N+3)^{ième} cadre.
